# EUROPÄISCHE PATENTSCHRIFT

(11) **EP 1 985 475 B1**
(45) Veröffentlichungstag und Bekanntmachung des Hinweises auf die Patenterteilung: **30.06.2010**
(21) Anmeldenummer: 08001875.7
(22) Anmeldetag: 01.02.2008
(51) Int. Cl.: B60G 15/06, B60G 17/02, F16F 9/54

(54) **Aufbauseitige Federbeinlagerung für Radaufhängungen**
Supported suspension unit bearing for wheel suspensions
Stockage d'une jambe de force à ressort du côté du montage pour suspensions de roues

(30) Priorität: 28.04.2007 DE 102007020022
(43) Veröffentlichungstag der Anmeldung: 29.10.2008
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- WO-A-03/106245
- DE-A1- 10 038 267
- DE-B3-102005 001 744
- DE-U- 1 938 142

## Beschreibung

Die Erfindung betrifft eine aufbauseitige Federbeinlagerung für Radaufhängungen von Kraftfahrzeugen gemäß dem Oberbegriff des Patentanspruches 1.

Aus der WO 03/106245 A ist eine gattungsgemäße Federbeinlagerung für eine Radaufhängung bekannt. Die Federbeinlagerung weist ein Federbein auf, das über ein Dämpferlager am Aufbau und über ein weiteres Lager an Radaufhängungselementen des Kraftfahrzeuges abgestützt ist. Zwischen dem Aufbau und dem Federbein ist ein Kardangelenk vorgesehen.

Aus der DE 100 38 267 A1 ist ebenfalls eine Lagerung für ein Federbein einer Radaufhängung bekannt, das über ein Kreuzgelenk am Fahrzeugaufbau abgestützt ist.

Eine weitere Federbeinlagerung ist in der DE 10 2005 001 742 A1 dargestellt, bei der die Kolbenstange des Teleskop-Stoßdämpfers des Federbeines über ein Kugelgelenk mit dem Dämpferlager und dieses mit dem Aufbau des Kraftfahrzeuges verbunden ist. Das Kugelgelenk besteht aus einem kolbenstangenseitigen Kugelkopf, der in einer dämpferseitigen Kugelpfanne gelagert ist. Durch das Kugelgelenk lassen sich auf die Kolbenstange des Stoßdämpfers wirkende Querkräfte vermeiden, die aufgrund von Schwenkbewegungen der Radaufhängungselemente, z. B. eines mit dem Stoßdämpfer verbundenen Querlenkers, auftreten können.

Das dargestellte Kugelgelenk muss aber konstruktionsbedingt relativ großvolumig ausgelegt werden, um den insbesondere dynamischen Belastungen in Druck- und Zugrichtung standhalten zu können. Zudem kann die Anbindung und Abstützung des an das Kugelgelenk angrenzenden Federtellers an der Kolbenstange des Stoßdämpfers problematisch sein.

Bei dieser Kugelgelenk-Lösung werden im Fahrbetrieb die Abstützkräfte bei Druckbelastung in die große Projektionsfläche des Kugelkopfes eingeleitet. Bei einer Zugbelastung des Kugelgelenks besteht jedoch die Gefahr eines "Ausknöpfens" des Kugelkopfes aus der Pfanne. D. h., dass die Fähigkeit des Kugelgelenks, die Kräfte durch Formschluss in beiden Belastungsrichtungen abzufangen, unterschiedlich ist. Bei Zugbelastung ist die Größe der zu übertragenden Kraft sehr begrenzt. Ein weiterer Nachteil besteht darin, dass der Kugeldrehpunkt nicht im Flächenschwerpunkt des Gummimetalllagers liegt.

Aus der DE 10 2005 001 744 B3 ist eine weitere, aufbauseitige Federbeinlagerung bekannt, bei der die Kolbenstange des Stoßdämpfers innerhalb des aufbauseitigen Dämpferlagers separat und mit geringerer Federrate angelenkt ist. Diese Lösung ist schwingungstechnisch von Vorteil, kann aber die vorstehend beschriebenen Querkräfte und Verzwängungen am Federbein nicht ausschließen.

Aufgabe der Erfindung ist es, eine aufbauseitige Federbeintagerung der gattungsgemäßen Art vorzuschlagen, die besonders robust sowie fertigungstechnisch und baulich günstig aufgebaut ist.

Diese Aufgabe wird erfindungsgemäß mit den Merkmalen des Patentanspruches 1 gelöst. Vorteilhafte Weiterbildungen der Erfindung beinhalten die weiteren Patentansprüche.

Erfindungsgemäß wird vorgeschlagen, dass das Gelenk durch ein Kardangelenk mit zwei sich kreuzenden Drehachsen gebildet ist. Das Kardangelenk ist in Druck- und Zugrichtung gleich belastungsfähig und somit besonders robust. Ferner ist es fertigungstechnisch einfach und erfordert wenig Einbauraum, insbesondere in axialer Richtung des Federbeines.

Das Kardangelenk ist zwischen dem Aufbau des Kraftfahrzeuges und dem Dämpferlager geschaltet. Daraus resultiert, dass die Anbindung und Abstützung des oberen Federtellers, der Kolbenstange des Stoßdämpfers und ggf. eines Anschlagpuffers als Zusatzfeder konstruktiv unverändert bleiben können, bzw. keine nachteiligen Kompromisse einzugehen sind.

Das Kardangelenk ist dabei baulich und fertigungstechnisch günstig in eine aufbauseitige ringförmige Aufnahmeplatte bzw. Aufnahmering und einen Gehäusering des Dämpferlagers integriert. Insbesondere kann zwischen der ringförmigen Aufnahmeplatte und dem Gehäusering des Dämpferlagers ein ringförmiges Gelenkkreuz angeordnet sein, das mit dem Aufnahmering und dem Gehäusering über jeweils diametral gegenüberliegende Drehlager verbunden ist. Durch die ringförmige Gestaltung des Kardangelenkes kann dieses besonders niedrig bauend ausgeführt sein.

Dazu können in vorteilhafter Weise die Drehlager des Aufnahmerings und des Gehäuseringes in einer einheitlichen Gelenkebene liegen, wodurch die Bauhöhe des Kardangelenkes weiter verringerbar ist.

Die Anordnung des Kardangelenkes kann bevorzugt so sein, dass dessen eine Drehachse parallel zur Schwenkachse desjenigen Radaufhängungselementes ausgerichtet ist, an dem das Federbein angelenkt ist.

Ferner können in baulich günstiger Weise die Drehlager des Kardangelenkes durch in den Aufnahmering und/oder in das Gelenkkreuz eingeschraubte Schwenk- bzw. Lagerbolzen gebildet sein, die in korrespondierenden Lageraufnahmen geführt sind. Die Lageraufnahmen können bevorzugt durch Lagerbüchsen oder eingesetzte Wälzlager gebildet sein.

Im Gegensatz zur aus dem Stand der Technik bekannten Kugelgelenk-Lösung ragen im erfindungsgemäßen Kardangelenk die Schwenkbolzen rotationssymmetrisch umschlossen jeweils in den Aufnahmering, den Gelenkkäfig und/oder den Gehäusering. Dadurch kann das Kardangelenk - im Unterschied zur Kugelgelenk-Lösung - auch Zugbelastungen ohne weiteres standhalten, ohne dass die Gefahr eines "Ausknöpfens" von Kardangelenkteilen besteht.

Zur Erzielung einer einfachen Montierbarkeit des Kardangelenkes können die Schwenkbolzen der Drehlager zwischen dem Gelenkkreuz und dem Gehäusering in das Gelenkkreuz und die Lagerbolzen der Drehlager zwischen der Aufnahmeplatte und dem Gelenkkreuz in den Aufnahmering jeweils von außen nach innen eingeschraubt sein. Dementsprechend wird erst das Gelenkkreuz mit dem Gehäusering und anschließend der Aufnahmering am Gelenkkreuz montiert.

Die vorstehend beschriebene Federbeinlagerung ist bevorzugt verwendbar an einem Federbein mit integrierter Niveauverstellung der Karosserie des Kraftfahrzeuges, wobei die Verstellvorrichtung mit einem um den Teleskop-Stoßdämpfer angeordneten Kugelschraubtrieb versehen ist, der über eine drehbar gelagerte Gewindespindel und eine axial verschiebbar gelagerte Kugelmutter elektromotorisch einen Federteller der Tragfeder relativ zum Aufbau verstellt. Bei der bevorzugten Verwendung können Querkräfte und Verzwängungen sowohl an der Kolbenstange des Stoßdämpfers als auch an der Verstellvorrichtung mit dem Kugelschraubtrieb eliminiert werden.

Ein Ausführungsbeispiel der Erfindung ist im folgenden mit weiteren Einzelheiten näher erläutert. Die schematische Zeichnung zeigt in:
- **Fig. 1**: ein am Aufbau und an einem Querlenker einer Radaufhängung für Kraftfahrzeuge angelenktes Federbein mit Darstellung der durch Ein- und Ausfederbewegungen sowie durch überlagerte Lenkbewegungen entstehenden Querkräfte und Verzwängungen;

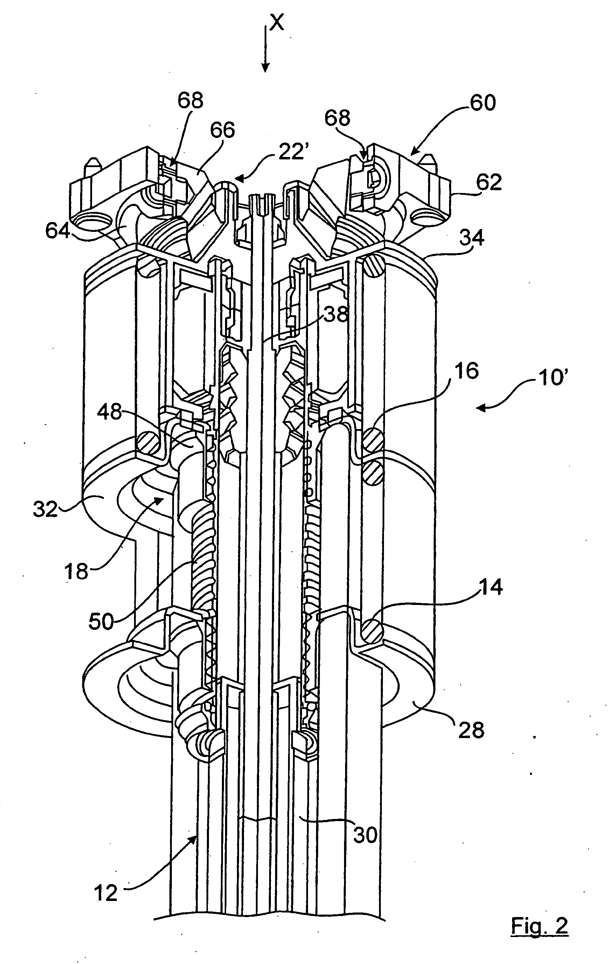

- **Fig. 2**: abschnittsweise ein Federbein gemäß Fig. 1, jedoch mit einem Kardangelenk zwischen Aufbau und Dämpferlager des Federbeines;
- **Fig. 3**: eine Draufsicht gemäß Pfeil X der **Fig. 2** auf die Aufnahmeplatte und das Dämpferlager des Federbeines;
- **Fig. 4**: ein Schnitt entlang der Linie IV - IV der **Fig. 3** durch das Dämpferlager mit Kardangelenk und Aufnahmeplatte; und
- **Fig. 5**: ein weiterer Schnitt gemäß Linie V - V der **Fig. 3** durch das Dämpferlager mit Kardangelenk und Aufnahmeplatte.

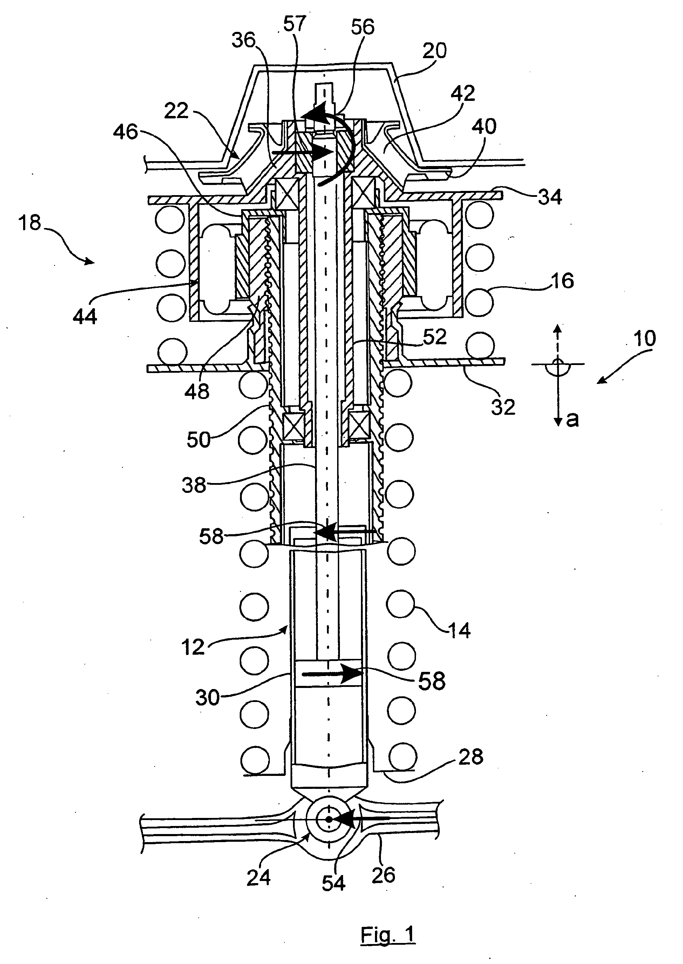

In der **Fig. 1** ist ein dem Stand der Technik gemäß der DE 10 2005 001 744 B3 entsprechendes Federbein 10 gezeigt, mit einem Teleskop-Stoßdämpfer 12, einer durch eine Schraubendruckfeder gebildeten Tragfeder 14, einer Ausgleichsfeder 16 und einer Höhenverstellvorrichtung 18.

Das Federbein 10 ist als Teil einer Radaufhängung für ein Kraftfahrzeug einerseits am Aufbau 20 über ein Dämpferlager 22 und andererseits über ein Gummi-Metall-Hülsenlager 24 an einem Querlenker 26 als Radaufhängungselement der Radaufhängung angelenkt.

Die Tragfeder 14 ist an ihrem unteren Ende über einen Federteller 28 am Dämpferrohr 30 des Stoßdämpfers 12 fest abgestützt und liegt an ihrem oberen Ende an einem axial verschiebbaren Federteller 32 an.

Die ebenfalls als Schraubendruckfeder ausgeführte Ausgleichsfeder 16 ist zwischen dem Federteller 32 und einem oberen Federteller 34 eingespannt, wobei der Federteller 34 über einen Lagerkern 36, an dem auch die Kolbenstange 38 des Stoßdämpfers 12 befestigt ist, am Dämpferlager 22 abgestützt ist.

Das Dämpferlager 22 weist eine Aufnahmeplatte 40 auf, die an dem Aufbau 20 des Kraftfahrzeuges befestigt ist; zwischen der Aufnahmeplatte 40 und dem Lagerkern 36 ist der gummielastische, ringförmige Dämpfungskörper 42 des Dämpferlagers 22 eingesetzt.

Das Dämpferlager 22 hat unter anderem die Aufgabe, hochfrequente Schwingungen, welche von der Fahrbahn über das Fahrwerk in den Aufbau 20 gelangen würden, in hohem Maße zu eliminieren. Außerdem werden durch das Dämpferlager 22 Fahrbahnstöße abgemildert, z. B. bei Überfahrt von Hindernissen, bei Schlechtwegstrecken oder bei Schlaglöchern. D. h., dass die Gestaltung des Dämpferlagers 22 nach speziellen, progressiv verlaufenden Kennlinien ausgelegt ist, die ein Verhärten des Lagers 22 bei zunehmendem Federweg bewusst anstreben. Das Dämpferlager 22 wird somit im Fahrbetrieb nicht unwesentlich verzwängt und damit verhärtet.

Die Höhenverstellvorrichtung 18 setzt sich im wesentlichen zusammen aus einem um die Kolbenstange 38 des Stoßdämpfers 12 und innerhalb der Ausgleichsfeder 16 angeordneten Elektromotor 44, dessen Rotor 46 eine drehbar auf einer festen Innenhülse 52 gelagerte Gewindespindel 50 antreibt.

Die Gewindespindel 50 wirkt trieblich mit der Kugelmutter 48 der Höhenverstellvorrichtung 18 derart zusammen, dass bei einer elektromotorischen Verdrehung der Gewindespindel 50 die mit dem Federteller 32 fest verbundene Kugelmutter 48 in Axialrichtung a verschoben wird. Dadurch wird die Vorspannung der Tragfeder 14 entsprechend zur Erzielung einer Niveauverstellung der Karosserie des Kraftfahrzeuges verstellt.

Eine detailliertere Beschreibung des in **Fig. 1** dargestellten Federbeines 10 kann im Rahmen der vorliegenden Erfindung entfallen.

Nachfolgend sind anhand der **Fig. 1** die auf das Federbein 10 wirkenden dynamischen Belastungen während des Fahrbetriebs beschrieben: Im Fahrbetrieb wird dem Federbein 10 von der Kinematik (Pfeil 54) des Querlenkers 26 über den Federweg und/oder die Lenkbewegung eine kardanische Bewegung mit einem Drehmoment (Pfeil 56) und eine Querkraftkomponente (Pfeil 57) aufgezwungen, wodurch das Dämpferlager 22 verzwängt wird bzw. verhärtet.

Da in der **Fig. 1** das Dämpferrohr 30 zur Kugelrollspindel 50 nicht gelagert ist, ergeben sich aus dieser Verzwängung des Dämpferlagers 22 zwangsweise in Querrichtung wirkende Abstützkräfte 58 als Kräftepaar in den jeweiligen Führungen der Kolbenstange 38 bzw. des Dämpferrohrs 30. Die Normalkräfte in den Führungen bewirken als Folge eine unerwünschte Reibung, wodurch zwangsläufig nachteilige Stick-Slip-Effekte entstehen, die sich negativ auf eine einwandfreie Dämpferfunktion auswirken. Eine solche einwandfreie Dämpferfunktion würde sich ergeben, wenn das Federbein 10 frei von Querkräften ist und damit reibungsfrei arbeiten kann.

Bei im Fahrbetrieb auftretenden elastischen Verformungen der Federbein-Bauteile kann sogar die rotierende Gewindespindel 50 den oszillierenden Dämpfer streifen.

Gemäß den **Fig**. **2 bis 5** ist das Federbein 10', das soweit nicht beschrieben gemäß **Fig. 1** ausgeführt sein kann und mit gleichen Bezugszeichen versehen ist, über ein Kardangelenk 60 mit dem Aufbau 20 (nicht eingezeichnet) des Kraftfahrzeuges verbunden.

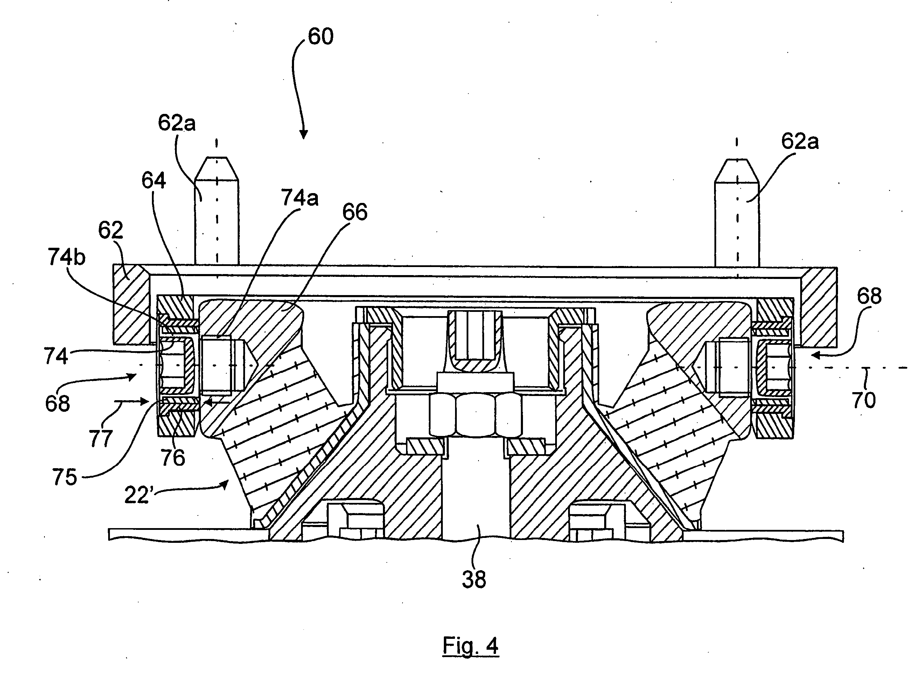

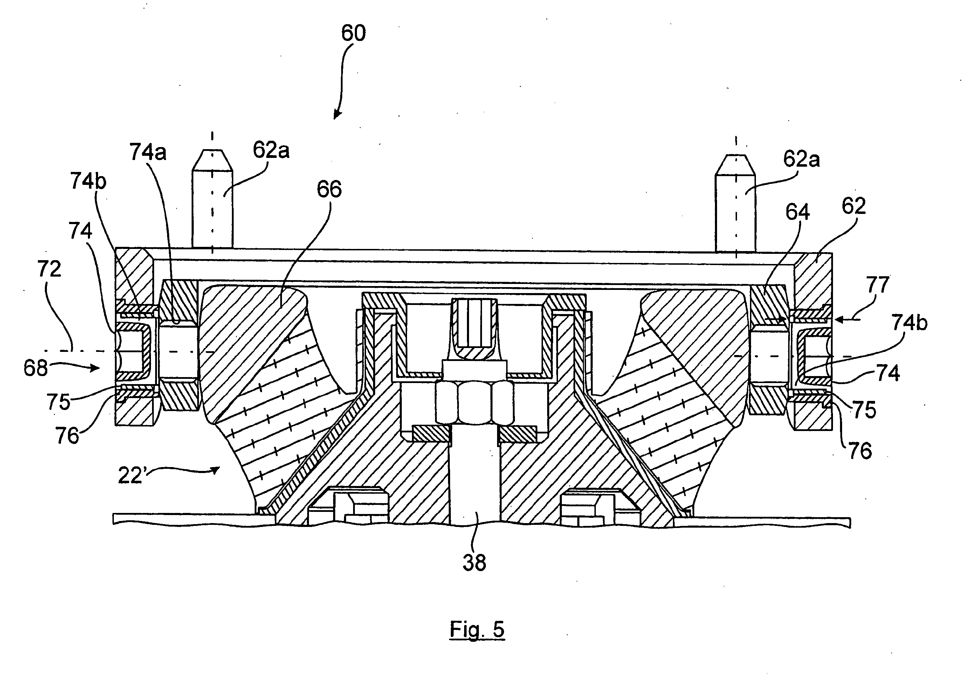

Das Kardangelenk 60 ist dabei zwischen das obere Dämpferlager 22' und dem Aufbau 20 eingeschaltet (vgl. **Fig. 4** **und** **5**).

Das Kardangelenk 60 ist gebildet aus einem radial außenliegenden Aufnahmering 62, der zur Befestigung an dem Aufbau 20 mit Schraubenbolzen 62a versehen ist. Radial innerhalb der Aufnahmeplatte 62 ist ein ringförmiges Gelenkkreuz 64 angeordnet. Wiederum radial innerhalb des Gelenkkreuzes 64 liegt ein Gehäusering 66 des Dämpferlagers 22'.

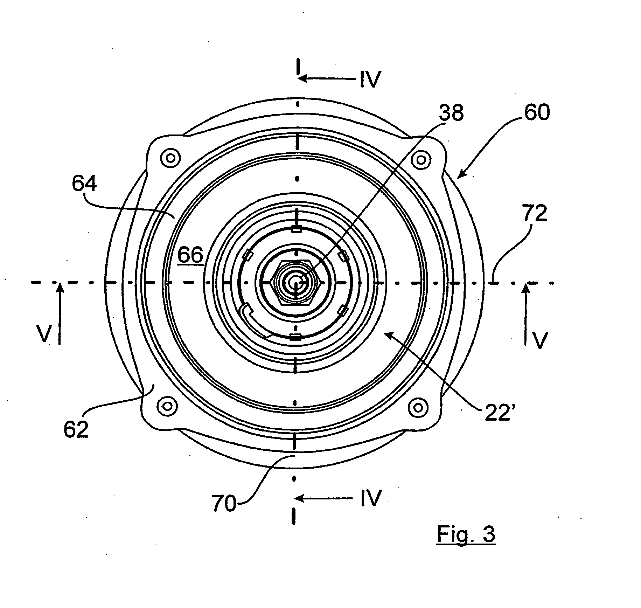

Das Gelenkkreuz 64 des Kardangelenkes 60 ist gemäß der **Fig. 5** über jeweils diametral gegenüberliegende Drehlager (einheitlich mit 68 bezeichnet) mit dem Aufnahmering 62 und dem Gehäusering 66 verbunden, wobei die Drehachsen 70, 72 (vgl. **Fig. 3**) 90 Grad versetzt zueinander liegen. Die eine Drehachse 70 ist so ausgerichtet, dass sie in Draufsicht gesehen parallel zur Schwenkachse (nicht eingezeichnet) des Radaufhängungselementes bzw. Querlenkers 26 ausgerichtet ist.

Ferner liegen die Drehlager 68 in einer einheitlichen Gelenkebene 70, 72, so dass, wie aus den **Fig. 4** und **5** ersichtlich, der Gehäusering 66, das Gelenkkreuz 64 und der Aufnahmering 62 ineinander verschachtelt angeordnet sind (geringe Bauhöhe).

Die Drehlager 68 sind jeweils gebildet durch einen in den Gehäusering 66 (vgl. **Fig. 4**) oder in das Gelenkkreuz 64 (**Fig. 5**) eingeschraubten Schwenkbolzen 74 mit einem Gewindeabschnitt 74a größeren Durchmessers, einem Innensechskant (ohne Bezugszeichen) für ein Montagewerkzeug und einem zylindrischen Lagerabschnitt 74b, wobei der Lagerabschnitt 74b jeweils in eine Lageraufnahme 76 im Gelenkkreuz 64 oder in der Aufnahmeplatte 62 einragt. Im gezeigten Ausführungsbeispiel ist die Lageraufnahme 76 eine im Gelenkkreuz 64 (**Fig. 4**) oder im Aufnahmering 62 eingepresste Buchse.

Gemäß der **Fig. 4** **oder** **5** ist auf den zylindrischen Lagerabschnitt 74b des Schwenkbolzens 74 eine Lagerhülse 75 geschoben. Die Lagerhülse 75 ist im dargestellten eingebauten Zustand mit dem Schwenkbolzen 74 verspannt, wie es mit den Pfeilen 77 angedeutet ist. Bei einer kardanischen Bewegung gleitet daher die mit dem Schwenkbolzen 74 drehfest verspannte Lagerhülse 75 in Umfangsrichtung innerhalb der eingepressten Buchse 76.

Im Gegensatz zu der aus dem Stand der Technik bekannten Kugelgelenk-Lösung sind im erfindungsgemäßen Kardangelenk 60 die Schwenkbolzen 74 rotationssymmetrisch umschlossen vom Aufnahmering 62, Gelenkkäfig 64 und vom Gehäusering 66.

Das Kardangelenk 60 kann daher - im Gegensatz zur Kugelgelenk-Lösung - einer Druckbelastung genauso standhalten wie einer Zugbelastung, ohne dass bei Zugbelastung die Gefahr eines "Ausknöpfens" von Kardangelenkteilen besteht.

Wie die **Fig. 4** **und** **5** weiterhin zeigen, sind die Lagerbolzen 74 jeweils von radial außen nach innen eingesetzt, wobei bei der Montage des Kardangelenkes 60 zunächst das Gelenkkreuz 64 mit dem Gehäusering 66 des Dämpferlagers 22' und dann der Aufnahmering 62 mit dem Gelenkkreuz 64 verbunden wird.

Die so mit dem Federbein 10' vormontierte Baueinheit kann dann über den Aufnahmering 62 mit dem Aufbau 20 des Kraftfahrzeuges verschraubt werden.

Das Federbein 10' kann bevorzugt gemäß **Fig. 1** mit einer Ausgleichsfeder 16 und einer Höhenverstellvorrichtung 18 ausgeführt sein. Die Erfindung ist aber auch bei Federbeinen mit nur einer Tragfeder 14 und einem Teleskop-Stoßdämpfer 12 anwendbar.

## Patentansprüche

1. Aufbauseitige Federbeinlagerung für Radaufhängungen von Kraftfahrzeugen, mit einem, vorzugsweise zumindest aus Teleskop-Stoßdämpfer (12) und Tragfeder (14) bestehenden Federbein (10), das über ein Dämpferlager (22) am Aufbau (20) und über ein weiteres Lager (24) an Radaufhängungselementen (26) des Kraftfahrzeuges abgestützt ist, wobei zwischen dem Aufbau (20) und dem Federbein (10) ein Gelenk (60) vorgesehen ist, wobei das Gelenk durch ein Kardangelenk (60) mit zwei sich kreuzenden Drehachsen (70, 72) gebildet ist, und das Kardangelenk (60) zwischen dem Aufbau (20) des Kraftfahrzeuges und dem Dämpferlager (22') geschaltet ist, **dadurch gekennzeichnet, dass** das Kardangelenk (60) in einem aufbauseitigen Aufnahmering (62) und einem Gehäusering (66) des Dämpferlagers (22') integriert ist.

2. Federbeinlagerung nach Anspruch 1, **dadurch gekennzeichnet, dass** zwischen dem Aufnahmering (62) und dem Gehäusering (66) des Dämpferlagers (22') ein ringförmiges Gelenkkreuz (64) angeordnet ist, das mit dem Aufnahmering (62) und dem Gehäusering (66) über jeweils diametral gegenüberliegende Drehlager (68) verbunden ist.

3. Federbeinlagerung nach Anspruch 2, **dadurch gekennzeichnet, dass** die Drehlager (68) des Aufnahmerings (62) und des Gehäuseringes (66) in einer einheitlichen Gelenkebene (70, 72) liegen.

4. Federbeinlagerung nach einem der vorhergehenden Ansprüche, **dadurch gekennzeichnet, dass** die eine Drehachse (70) des Kardangelenkes (60) parallel zur Schwenkachse desjenigen Radaufhängungselementes (26) ausgerichtet ist, an dem das Federbein (10') angelenkt ist.

5. Federbeinlagerung nach einem der Ansprüche 2 bis 4, **dadurch gekennzeichnet, dass** die Drehlager (68) durch in den Aufnahmering (62) und/oder in das Gelenkkreuz (64) eingeschraubte Lagerbolzen (74) gebildet sind, die in korrespondierenden Lageraufnahmen (76) geführt sind.

6. Federbeinlagerung nach Anspruch 5, **dadurch gekennzeichnet, dass** die Lageraufnahmen (76) durch Lagerbüchsen oder Wälzlager gebildet sind.

7. Federbeinlagerung nach Anspruch 5 oder 6, **dadurch gekennzeichnet, dass** die Lagerbolzen (74) der Drehlager (68) zwischen dem Gelenkkreuz (64) und dem Gehäusering (66) in das Gelenkkreuz (64) und die Lagerbolzen (74) der Drehlager (68) zwischen dem Aufnahmering (62) und dem Gelenkkreuz (64) in den Aufnahmering (62) jeweils von außen nach innen eingeschraubt sind.

8. Federbeinlagerung nach einem der vorhergehenden Ansprüche, **dadurch gekennzeichnet, dass** das Federbein (10) eine integrierte Niveauverstellung der Karosserie des Kraftfahrzeuges aufweist, bei der eine Verstellvorrichtung (18) mit einem um den Teleskop-Stoßdämpfer (12) angeordneten Kugelschraubtrieb versehen ist, der über eine drehbar gelagerte Gewindespindel (50) und eine axial verschiebbar gelagerte Kugelmutter (48) elektromotorisch einen Federteller (32) der Tragfeder (14) relativ zum Aufbau (20) verstellt.

## Claims

1. Body-side spring-strut mounting for wheel suspension systems of motor vehicles, having a spring strut (10) which preferably comprises at least a telescopic shock absorber (12) and a bearing spring (14) and is supported via a shock-absorber bearing (22) on the vehicle body (20) and via a further bearing (24) on wheel suspension elements (26) of the motor vehicle, a joint (60) being provided between the vehicle body (20) and the spring strut (10), the joint being formed by a cardan joint (60) with two crossing rotational axes (70, 72), and the cardan joint (60) being connected between the body (20) of the motor vehicle and the shock-absorber bearing (22'), **characterized in that** the cardan joint (60) is integrated into a body-side holding ring (62) and a housing ring (66) of the shock-absorber bearing (22').

2. Spring-strut mounting according to Claim 1, **characterized in that** an annular spider (64) which is connected to the holding ring (62) and the housing ring (66) via pivot bearings (68) which lie diametrically opposite one another in each case is arranged between the holding ring (62) and the housing ring (66) of the shock-absorber bearing (22').

3. Spring-strut mounting according to Claim 2, **characterized in that** the pivot bearings (68) of the holding ring (62) and the housing ring (66) lie in a common joint plane (70, 72).

4. Spring-strut mounting according to one of the preceding claims, **characterized in that** one rotational axis (70) of the cardan joint (60) is oriented parallel to the pivot axis of that wheel suspension element (26), on which the spring strut (10') is articulated.

5. Spring-strut mounting according to one of Claims 2 to 4, **characterized in that** the pivot bearings (68) are formed by bearing pins (74) which are screwed into the holding ring (62) and/or into the spider (64) and are guided in corresponding bearing receptacles (76).

6. Spring-strut mounting according to Claim 5, **characterized in that** the bearing receptacles (76) are formed by bearing bushes or anti-friction bearings.

7. Spring-strut mounting according to Claim 5 or 6, **characterized in that** the bearing pins (74) of the pivot bearings (68) between the spider (64) and the housing ring (66) are screwed into the spider (64), and the bearing pins (74) of the pivot bearings (68) between the holding ring (62) and the spider (64) are screwed into the holding ring (62) in each case from the outside to the inside.

8. Spring-strut mounting according to one of the preceding claims, **characterized in that** the spring strut (10) has an integrated ride-height adjusting means of the body of the motor vehicle, in which integrated ride-height adjusting means an adjusting device (18) is provided with a ball screw drive which is arranged around the telescopic shock absorber (12) and adjusts by electric motor a spring collar (32) of the bearing spring (14) relative to the vehicle body (20), via a rotatably mounted threaded spindle (50) and an axially displaceably mounted ball nut (48).

## Revendications

1. Support de jambe de force du côté de la carrosserie, pour suspensions de roues de véhicules automobiles, comprenant une jambe de force (10) constituée au moins d'un amortisseur télescopique (12) et d'un ressort porteur (14), qui est supportée par le biais d'un palier d'amortisseur (22) sur la carrosserie (20) et par le biais d'un autre palier (24) sur des éléments de suspension de roues (26) du véhicule automobile, une articulation (60) étant prévue entre la carrosserie (20) et la jambe de force (10), l'articulation étant formée par une articulation à cardan (60) avec deux axes de rotation se croisant (70, 72), et l'articulation à cardan (60) étant montée entre la carrosserie (20) du véhicule automobile et le palier d'amortisseur (22'), **caractérisé en ce que** l'articulation à cardan (60) est intégrée dans une bague de réception (62) du côté de la carrosserie, et une bague de boîtier (66) du palier d'amortisseur (22').

2. Support de jambe de force selon la revendication 1, **caractérisé en ce qu'**entre la bague de réception (62) et la bague de boîtier (66) du palier d'amortisseur (22') est disposé un croisillon de forme annulaire (64), qui est connecté à la bague de réception (62) et à la bague de boîtier (66) par le biais de paliers pivotants (68) à chaque fois diamétralement opposés.

3. Support de jambe de force selon la revendication 2, **caractérisé en ce que** les paliers pivotants (68) de la bague de réception (62) et de la bague de boîtier (66) se trouvent dans un plan d'articulation unitaire (70, 72).

4. Support de jambe de force selon l'une quelconque des revendications précédentes, **caractérisé en ce que** l'un des axes de rotation (70) de l'articulation à cardan (60) est orienté parallèlement à l'axe de pivotement de l'élément de suspension de roue (26) sur lequel est articulée la jambe de force (10').

5. Support de jambe de force selon l'une quelconque des revendications 2 à 4, **caractérisé en ce que** les paliers pivotants (68) sont formés par des boulons de palier (74) vissés dans la bague de réception (62) et/ou dans le croisillon (64), qui sont guidés dans des logements de palier correspondants (76).

6. Support de jambe de force selon la revendication 5, **caractérisé en ce que** les logements de palier (76) sont formés par des coussinets ou des paliers à roulement.

7. Support de jambe de force selon la revendication 5 ou 6, **caractérisé en ce que** les boulons de palier (74) des paliers pivotants (68) sont vissés entre le croisillon (64) et la bague de boîtier (66) dans le croisillon (64) et les boulons de palier (74) des paliers pivotants (68) sont vissés entre la bague de réception (62) et le croisillon (64) dans la bague de réception (62), à chaque fois depuis l'extérieur vers l'intérieur.

8. Support de jambe de force selon l'une quelconque des revendications précédentes, **caractérisé en ce que** la jambe de force (10) présente un réglage de niveau intégré de la carrosserie du véhicule automobile, dans lequel un dispositif de réglage (18) est pourvu d'un mécanisme hélicoïdal à billes disposé autour de l'amortisseur télescopique (12), qui, par le biais d'une broche filetée (50) montée à rotation et d'un écrou à billes (48) monté de manière déplaçable axialement, règle par le biais d'un moteur électrique un ressort Belleville (32) du ressort porteur (14) par rapport à la carrosserie (20).
